# EUROPEAN PATENT SPECIFICATION

(11) **EP 3 424 798 B1**
(45) Date of publication and mention of the grant of the patent: **08.04.2020**
(21) Application number: 18181727.1
(22) Date of filing: 04.07.2018
(51) Int. Cl.: B62D 5/04

(54) **STEERING SYSTEM AND METHOD FOR PRODUCING STEERING SYSTEM**
LENKSYSTEM UND VERFAHREN ZUR HERSTELLUNG EINES LENKSYSTEMS
SYSTÈME DE DIRECTION ET PROCÉDÉ DE PRODUCTION DE SYSTÈME DE DIRECTION

(30) Priority: 06.07.2017 JP 2017132672
(43) Date of publication of application: 09.01.2019
(73) Proprietor: JTEKT CORPORATION, Osaka-shi, Osaka 542-8502 (JP)
(72) Inventor: OHASHI, Tatsuya, Osaka-shi, Osaka 542-8502 (JP)
(74) Representative: Winter, Brandl, Fürniss, Hübner, Röss, Kaiser, Polte - Partnerschaft mbB

(56) References cited:
- DE-A1-102010 046 613
- DE-A1-102011 056 025
- DE-A1-102012 017 192
- DE-A1-102014 201 600
- JP-A- 2014 034 268
- US-A1- 2013 126 261

## Description

### BACKGROUND OF THE INVENTION

### 1. Field of the Invention

The present invention relates to a steering system and a method for producing the steering system.

### 2. Description of Related Art

As a conventional steering system for vehicles, an electric power steering system (EPS) is used that applies assist force to a steering mechanism by converting rotation of a motor into axial movement of a steering operation shaft with the use of a ball screw mechanism. As an EPS of this type, an EPS is known that includes a motor disposed parallel to a steering operation shaft and transmits rotation of the motor to a ball screw mechanism via a pair of pulleys and a belt (see Japanese Patent Application Publication No. 2014-34268 (JP 2014-34268 A) (Paragraph [0024], etc.), for example).

In an EPS described in JP 2014-34268 A, a ball screw nut having a flange is lightly press-fitted into an inner periphery of a cylindrical driven pulley, and this flange portion is sandwiched between the driven pulley and a lock nut fastened to an open portion of the driven pulley, whereby the ball screw nut is fixed to the driven pulley. Thus, the ball screw nut is rotated integrally with the driven pulley, whereby rotation transmitted from the drive pulley via a belt is converted into axial movement of a steering operation shaft.

When the ball screw nut is press-fitted into the inner periphery of the driven pulley, it is inevitable that the ball screw nut slightly deforms during the press fitting. Consequently, a groove formed on the inner peripheral surface of the ball screw nut may deform, which may adversely affect smooth rolling of balls. When the ball screw nut is fitted into the inner periphery of the driven pulley by loose fitting with a very small clearance formed between the outer periphery of the ball screw nut and the inner periphery of the driven pulley, the axis of the driven pulley and the axis of the ball screw nut are easily misaligned, and thus improvement of alignment is required.

The document DE 10 2012 017 192 A1 discloses a belt type driveline and a rack assist type electric power steering apparatus, which improve power transmission efficiency and increase durability. This is by preventing spinning with no traction of a ball nut and a nut pulley due to a slip between the ball nut and the nut pulley in an operation of a belt by a motor. Therefore a user is provided with convenient steering by minimizing vibration and noise transferred through a rack bar, the ball nut, the nut pulley, etc., when the rack bar slides while the nut pulley and the ball nut rotate. DE 10 2014 201 600 A1 discloses the features of the preamble of claims 1 and 8.

### SUMMARY OF THE INVENTION

An object of the present invention is to provide a steering system in which smooth operation of a ball screw mechanism can be maintained and a driven pulley and a ball screw nut can be coaxially aligned accurately, and a method for producing the steering system.

A steering system according to one aspect of the present invention includes: a steering operation shaft provided so as to be able to reciprocate in an axial direction and having a groove that is formed in part of an outer periphery of the steering operation shaft and along which a ball rolls; a motor disposed parallel to the steering operation shaft; a drive pulley coupled to the motor; a driven pulley rotatably provided in a housing that accommodates the steering operation shaft; a belt wound around the drive pulley and the driven pulley; a ball screw nut loosely fitted into an inner periphery of the driven pulley and constituting a ball screw mechanism that is screwed onto the steering operation shaft via a plurality of balls and converts rotation of the driven pulley into reciprocation of the steering operation shaft; and an aligning structure including a plurality of mounting grooves formed on a first surface among an inner peripheral surface of the driven pulley and an outer peripheral surface of the ball screw nut and extending in an axial direction, a plurality of locking grooves formed on a second surface among the inner peripheral surface of the driven pulley and the outer peripheral surface of the ball screw nut, extending in the axial direction, and opposed to the respective mounting grooves in a radial direction, and a plurality of elastic members each of which has a pair of base parts extending in the axial direction and a spring part formed between the base parts and being elastically deformable in the radial direction, the aligning structure being configured to apply biasing force from the elastic members to between the driven pulley and the ball screw nut so as to align an axis of the driven pulley and an axis of the ball screw nut with each other. Each of the elastic members is disposed in the corresponding mounting groove with at least one of the pair of base parts spaced apart from a circumferential side surface of the mounting groove, and the spring part is locked with respect to the corresponding locking groove from both sides in a circumferential direction.

With this configuration, the ball screw nut is biased by the elastic members at the inner periphery of the driven pulley, and thus the ball screw nut is fitted into the driven pulley with a smaller radial load being applied thereto than when the ball screw nut is press-fitted. Thus, the ball screw nut can be prevented from being distorted, and smooth operation of the ball screw mechanism can be maintained. Because the biasing force is applied to between the driven pulley and the ball screw nut so as to align the axes thereof, the driven pulley and the ball screw nut can be coaxially aligned accurately. Furthermore, each of the elastic members is disposed in the corresponding mounting groove with the base parts spaced apart from circumferential side surfaces of the mounting groove, and thus the base parts can be displaced in the mounting groove when the spring part elastically deforms. Consequently, the spring part can elastically deform more easily than when the base parts are provided without spaces from the circumferential side surface of the mounting groove, and thus the elastic member can be prevented from being forcibly deformed, and an excessive load can be prevented from being applied from the elastic member (base parts) to the mounting groove.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic configuration diagram of an electric power steering system;
FIG. 2 is a sectional view of an actuator and its surroundings according to a first embodiment, taken along the axial direction;
FIG. 3 is a sectional view illustrating an aligning structure according to the first embodiment in a cross-section orthogonal to the axial direction (sectional view taken along line III-III in FIG. 2);
FIG. 4 is a perspective view of an elastic member according to the first embodiment;
FIG. 5 is a schematic diagram illustrating assembly of the aligning structure according to the first embodiment;
FIG. 6 is a schematic diagram illustrating a modified example of the elastic member according to the first embodiment;
FIG. 7 is a sectional view of an aligning structure and its surroundings according to a second embodiment, taken along the axial direction;
FIG. 8 is a perspective view of an elastic member according to the second embodiment;
FIG. 9 is an enlarged sectional view illustrating an aligning structure according to another example in a cross-section orthogonal to the axial direction; and
FIG. 10 is an enlarged sectional view illustrating an aligning structure according to another example in a cross-section orthogonal to the axial direction.

### DETAILED DESCRIPTION OF EMBODIMENTS

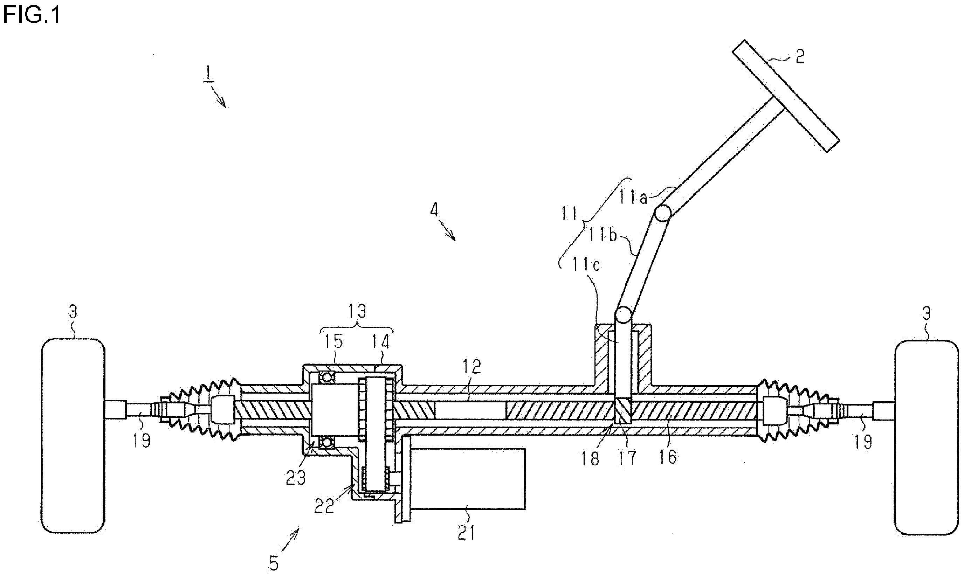

A first embodiment in which a steering system of the present invention is embodied in an electric power steering system (EPS) will be described hereinafter with reference to FIG. 1 to FIG. 6.

As depicted in FIG. 1, this EPS 1 includes a steering mechanism 4 that steers steered wheels 3 in response to driver's operation of a steering wheel 2 and an actuator 5 that applies assist force for assisting a driver in steering operation to the steering mechanism 4.

The steering mechanism 4 includes a steering shaft 11 to which the steering wheel 2 is fixed, a rack shaft 12 as a steering operation shaft that is caused to reciprocate in an axial direction by rotation of the steering shaft 11, and a rack housing 13 as a housing through which the rack shaft 12 is disposed so as to be able to reciprocate. The steering shaft 11 includes a column shaft 11a, an intermediate shaft 11b, and a pinion shaft 11c that are coupled to each other in this order from the steering wheel 2 side.

The rack housing 13 includes a first housing 14 that is formed in a cylindrical shape and a second housing 15 that is formed in a cylindrical shape and is fixed to one end side of the first housing 14 in the axial direction (left side in FIG. 1). The rack shaft 12 and the pinion shaft 11c are disposed in the first housing 14 with a predetermined crossing angle formed therebetween. Rack teeth 16 formed on the rack shaft 12 and pinion teeth 17 formed on the pinion shaft 11c mesh with each other, thereby constituting a rack-and-pinion mechanism 18. To both ends of the rack shaft 12, tie rods 19 are coupled. Distal ends of the tie rods 19 are coupled to knuckle arms (not depicted) to which the steered wheels 3 are assembled. Thus, in the EPS 1, rotation of the steering shaft 11 in response to steering operation is converted into axial movement of the rack shaft 12 by the rack-and-pinion mechanism 18. This axial movement is transmitted to the knuckle arms via the tie rods 19, and consequently the steered angle of the steered wheels 3, that is, the traveling direction of a vehicle is changed.

The actuator 5 includes a motor 21 serving as a drive source, a transmission mechanism 22 that transmits rotation of the motor 21, and a ball screw mechanism 23 that converts the rotation transmitted by the transmission mechanism 22 into reciprocation of the rack shaft 12. The actuator 5 is provided in an area where the first housing 14 and the second housing 15 are connected. The actuator 5 transmits rotation of the motor 21 to the ball screw mechanism 23 via the transmission mechanism 22, and converts the rotation to reciprocation of the rack shaft 12 with the ball screw mechanism 23, thereby applying assist force to the steering mechanism 4.

The following describes a configuration of the actuator 5 in detail. Hereinafter, for convenience of description, the first housing 14 side is called one end side in the axial direction, and the second housing 15 side is called the other end side in the axial direction.

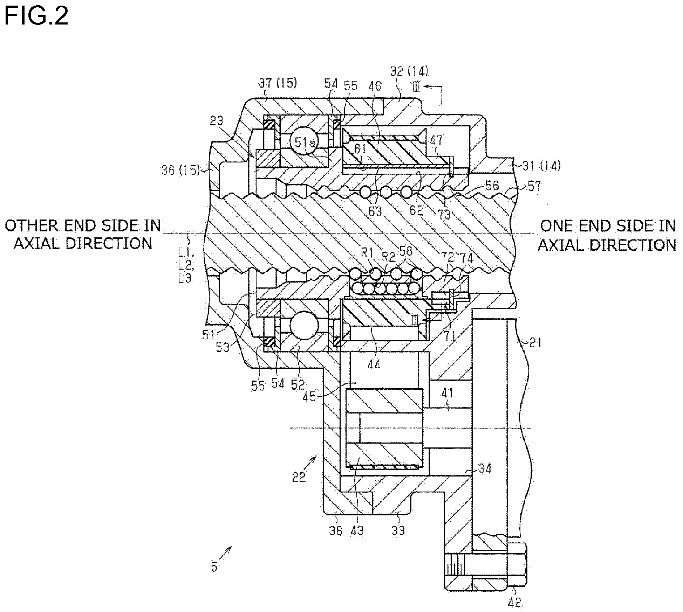

As depicted in FIG. 2, the first housing 14 has a first cylindrical portion 31 provided on one end side in the axial direction (right side in FIG. 2) and having a cylindrical shape and a first accommodating portion 32 formed in an end portion of the first cylindrical portion 31 on the other end side in the axial direction (left side in FIG. 2). The first accommodating portion 32 is formed in a cylindrical shape the diameter of which is larger than that of the first cylindrical portion 31. The first accommodating portion 32 has a protruding portion 33 that is formed in such a shape that part of a peripheral wall of the first accommodating portion 32 protrudes toward the side on which the motor 21 is disposed (lower side in FIG. 2). In a bottom portion of the protruding portion 33, a through hole 34 that penetrates the protruding portion 33 in the axial direction of the rack shaft 12 is formed.

The second housing 15 has a second cylindrical portion 36 provided on the other end side in the axial direction and having a cylindrical shape and a second accommodating portion 37 formed in an end portion of the second cylindrical portion 36 on the one end side in the axial direction. The second accommodating portion 37 is formed in a cylindrical shape the diameter of which is larger than that of the second cylindrical portion 36. The second accommodating portion 37 has a cover portion 38 that is formed so as to cover the protruding portion 33 of the first housing 14.

A rotary shaft 41 of the motor 21 is inserted into a protruding portion 33 through the through hole 34. The motor 21 is fixed to the first housing 14 with a bolt 42 such that the rotary shaft 41 is positioned parallel to the rack shaft 12.

The transmission mechanism 22 includes a drive pulley 43, a driven pulley 44, and a belt 45 wound around the drive pulley 43 and the driven pulley 44. The drive pulley 43 is formed in a cylindrical shape, and is coupled to the rotary shaft 41 of the motor 21 so as to be integrally rotatable about the same axis. The driven pulley 44 is formed in a cylindrical shape having a wound portion 46 around which the belt 45 is wound and an extended portion 47 that is extended from the wound portion 46 toward the one end side in the axial direction. The driven pulley 44 of the present embodiment contains resin material. The driven pulley 44 is disposed around an outer periphery of the rack shaft 12 such that the axis L2 of the driven pulley 44 and the axis L1 of the rack shaft 12 are coaxially aligned, and is fitted onto a ball screw nut 51 so as to be integrally rotatable with an aligning structure 48 (described later) interposed therebetween. The belt 45 contains elastic material such as rubber, and is wound such that a predetermined tension is generated between the drive pulley 43 and the driven pulley 44.

The ball screw mechanism 23 includes the ball screw nut 51 having a cylindrical shape coaxially disposed on the outer periphery of the rack shaft 12. The ball screw nut 51 of the present embodiment contains metallic material. The outside diameter of the ball screw nut 51 is slightly smaller than the bore diameter of the driven pulley 44. The ball screw nut 51 is fitted by loose fitting with a very small clearance formed between an outer periphery thereof and the inner periphery of the driven pulley 44. On an outer periphery of the ball screw nut 51, a bearing 52 is provided such that a flange portion 51a is sandwiched between the bearing 52 and the wound portion 46 of the driven pulley 44, and also a lock nut 53 for defining the axial position of the bearing 52 is screwed. The ball screw nut 51 is rotatably supported via the bearing 52 such that the axis L3 of the ball screw nut 51 and the axis L1 of the rack shaft 12 are coaxially aligned. On both sides of the bearing 52, cages 54 each having an L-shaped cross-section are disposed adjacently to the outer ring of the bearing 52. On the cages 54, elastic bodies 55 such as rubbers are each disposed in a manner compressed between the first and second housings 14 and 15.

On an inner periphery of the ball screw nut 51, a groove 56 is formed. On an outer periphery of the rack shaft 12, a groove 57 that corresponds to the groove 56 is formed. The grooves 56 and 57 are opposed to each other, thereby forming a spiral ball raceway R1. In the ball raceway R1, respective balls 58 are arranged so as to be sandwiched between the groove 56 of the ball screw nut 51 and the groove 57 of the rack shaft 12. In other words, the ball screw nut 51 is screwed on the outer periphery of the rack shaft 12 via the respective balls 58.

By this configuration, when the ball screw nut 51 (the driven pulley 44) rotates relative to the rack shaft 12, the respective balls 58 roll in the ball raceway R1 while receiving a load (frictional force) due to the relative rotation. The rolling of the respective balls 58 displaces the relative position between the rack shaft 12 and the ball screw nut 51 in the axial direction, whereby torque of the motor 21 is applied as assist force to the steering mechanism 4. The balls 58 rolling in the ball raceway R1 pass through a circulation passage R2 that is formed in the ball screw nut 51 and serves as a shortcut connecting two points in the ball raceway R1, and thus endlessly circulate therein.

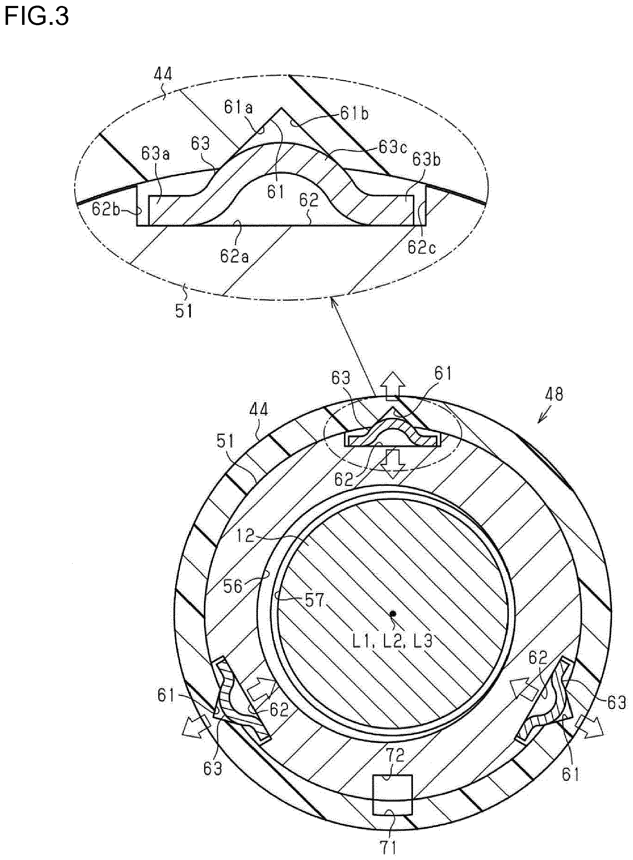

The following describes the aligning structure 48 for the driven pulley 44 and the ball screw nut 51. As depicted in FIG. 2 and FIG. 3, the aligning structure 48 includes a plurality of locking grooves 61 formed on an inner peripheral surface of the driven pulley 44, a plurality of mounting grooves 62 formed on an outer peripheral surface of the ball screw nut 51 and opposed to the respective locking grooves 61 in the radial direction, and a plurality of elastic members 63 each of which is disposed between each locking groove 61 and the corresponding mounting groove 62. The aligning structure 48 applies biasing force from the elastic members 63 to between the driven pulley 44 and the ball screw nut 51 so as to align the axes L2 and L3 with each other.

Specifically, on the inner peripheral surface of the driven pulley 44, three locking grooves 61 are formed at regular angular intervals in the circumferential direction. Each locking groove 61 extends over the whole length of the driven pulley 44 in the axial direction, and is open at the one end side of the driven pulley 44 in the axial direction. The cross-section of each locking groove 61 is formed in a V-shape in which a pair of flatly formed inner surfaces 61a and 61b are connected at a bottom portion of the locking groove 61. The inner surfaces 61a and 61b are inclined so as to be substantially symmetrical about a central line connecting the central position of the locking groove 61 in the circumferential direction and the center of the driven pulley 44. On the inner peripheral surface of the driven pulley 44, at a position that is opposed to one of the locking grooves 61 across the center of the driven pulley 44, a positioning recessed portion 71 as a positioning portion that is open to the one end side in the axial direction is formed.

On the outer peripheral surface of the ball screw nut 51, three mounting grooves 62 are formed at regular angular intervals in the circumferential direction. Each mounting groove 62 extends over an axial length from the one end side of the flange portion 51a to the one end side of the ball screw nut 51 in the axial direction, and is open to the one end side in the axial direction. The cross-section of the mounting groove 62 is formed in a rectangular shape having a flat bottom surface 62a orthogonal to a central line connecting the central position of the mounting groove 62 in the circumferential direction and the center of the ball screw nut 51 and a pair of circumferential side surfaces 62b and 62c orthogonal to the bottom surface 62a. On the outer peripheral surface of the ball screw nut 51, at a position that is opposed to one of the mounting grooves 62 across the center of the ball screw nut 51, a positioning recessed portion 72 as a positioning portion that is open to the one end side in the axial direction is formed. Furthermore, on an outer peripheral surface of the ball screw nut 51, at a position facing an end surface of the driven pulley 44 on the one end side in the axial direction, an annular groove 73 extending in the circumferential direction across the respective mounting grooves 62 is formed. In the annular groove 73, a snap ring 74 serving as fixing member is provided, thereby restricting movement of the respective elastic members 63 and the driven pulley 44 toward the one end side in the axial direction.

As depicted in FIG. 2 to FIG. 4, as each elastic member 63, a flat spring that is long in the axial direction is used. The axial length of the elastic member 63 is slightly shorter than the axial length of each locking groove 61. Each elastic member 63 has a pair of base parts 63a and 63b and a spring part 63c that is integrally formed between the base parts 63a and 63b. The base parts 63a and 63b each have a circumferential width extending in the circumferential direction along the bottom surface 62a of the corresponding mounting groove 62, and are each formed in a long slender plate-like shape extending in the axial direction. The spring part 63c is formed so as to have an arc-shaped cross-section. The elastic member 63 of the present embodiment is formed so as to have a cross-sectional shape that is uniform over the entire length in the axial direction.

The elastic member 63 is disposed in the mounting groove 62 with the base parts 63a and 63b spaced apart from the circumferential side surfaces 62b and 62c, and is also disposed between the mounting groove 62 and the locking groove 61 such that the spring part 63c is locked on the inner surfaces 61a and 61b of the locking groove 61 in a compressed manner in the radial direction. One end of the elastic member 63 in the axial direction is positioned near the opening of the locking groove 61, and thus the axial range in which the elastic member 63 is inserted between the mounting groove 62 and the locking groove 61 substantially overlaps the whole of an axial range on the driven pulley 44 around which the belt 45 is wound.

In this manner, the spring part 63c is in contact with the inner surfaces 61a and 61b to be compressed in the radial direction, and thus is locked with respect to the locking groove 61 from both sides in the circumferential direction. By this configuration, the driven pulley 44 can rotate integrally with the ball screw nut 51. As indicated by white arrows in FIG. 3, the elastic members 63 disposed at regular angular intervals in the circumferential direction apply biasing forces so as to align the axes L2 and L3 of the driven pulley 44 and the ball screw nut 51 with each other. Herein, in order to maintain a state in which each spring part 63c is continuously compressed in the radial direction within a temperature range that can be expected under the use conditions of the EPS 1 (the actuator 5), dimensions or other specifications of the spring part are set.

The following describes a method for producing the EPS 1, focusing on assembly of the aligning structure 48. In the present embodiment, the aligning structure 48 is assembled by loosely fitting the ball screw nut 51 into the inner periphery of the driven pulley 44, and then using an insertion jig 81 to insert the elastic member 63 between the locking groove 61 and the mounting groove 62 from the one end side in the axial direction.

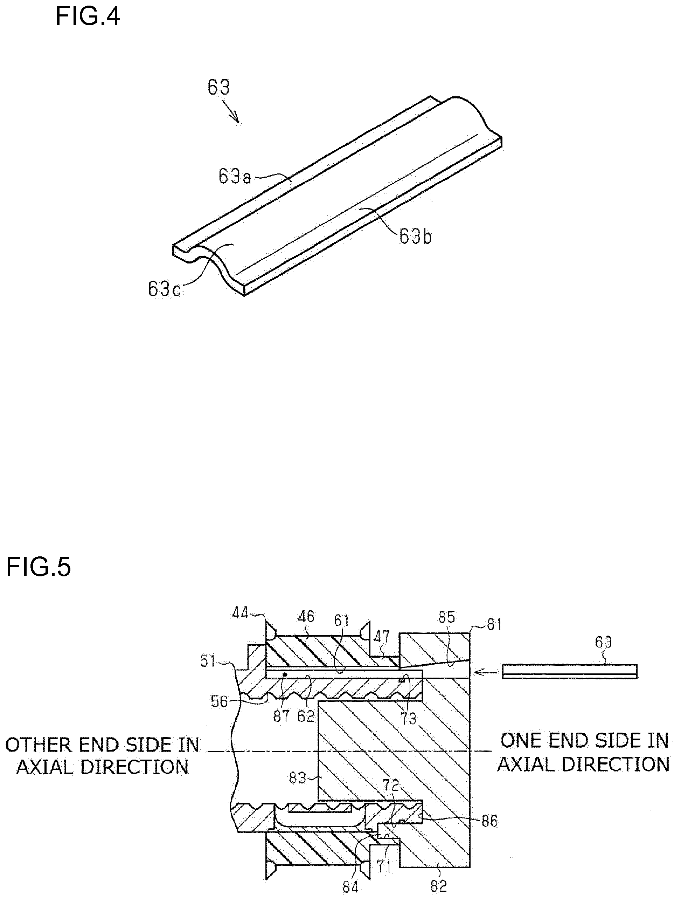

Specifically, as depicted in FIG. 5, the insertion jig 81 is formed by a disk-like shaped base portion 82, a columnar insertion portion 83 protruding from the center of the base portion 82 in the axial direction to be inserted into the ball screw nut 51, and a positioning projecting portion 84 projecting from an outer peripheral portion of the base portion 82 in the axial direction. The cross-section of the positioning projecting portion 84 is formed so as to have substantially the same cross-sectional shape formed by combining the shapes of the positioning recessed portions 71 and 72 of the driven pulley 44 and the ball screw nut 51.

In the base portion 82, a plurality of communication holes 85 that penetrate the base portion 82 in the axial direction are formed at regular angular intervals in the circumferential direction. The communication holes 85 are formed such that the number thereof is the same (three) as that of the locking grooves 61 and the mounting grooves 62, and are each formed so as to communicate with a space 87 between the corresponding mounting groove 62 and the corresponding locking groove 61 in the axial direction. The cross-section of each communication hole 85 is formed in a cross-sectional shape formed substantially by combining the shapes of each locking groove 61 and the corresponding mounting groove 62, and is formed such that the radial length (depth) of a V-shaped portion thereof corresponding to the locking groove 61 continuously becomes shorter (shallower) from the one end side to the other end side in the axial direction. The depth of the V-shaped portion is set to a depth that allows the corresponding spring part 63c to be inserted without being elastically deformed at one end of each communication hole 85 in the axial direction, and is formed to be shallower than the depth of the locking groove 61 at the other end in the axial direction. In other words, the communication hole 85 is formed such that the compression amount of the spring part 63c in radial direction at an opening of the communication hole 85 closer to the space 87 is larger than the compression amount at an opening of the communication hole 85 opposite to the space 87, and is also larger than the compression amount between the mounting groove 62 and the locking groove 61.

Furthermore, in the base portion 82, an annular recessed portion 86 into which one end portion of the ball screw nut 51 in the axial direction (specifically, a portion from the one end in the axial direction to the annular groove 73) is formed. By this annular recessed portion 86, in the other end portion of the communication hole 85 in the axial direction, a portion thereof forming a rectangular shape opposed to the mounting groove 62 is cut out.

When the aligning structure 48 is assembled, the ball screw nut 51 is loosely fitted into the inner periphery of the driven pulley 44 first, and then the relative position between the driven pulley 44 and the ball screw nut 51 is determined such that each locking groove 61 and the corresponding mounting groove 62 are opposed to each other in the radial direction, that is, the positioning recessed portions 71 and 72 are opposed to each other in the radial direction. Subsequently, the insertion portion 83 of the insertion jig 81 is inserted into the inner periphery of the ball screw nut 51, and the positioning projecting portion 84 is inserted between the positioning recessed portions 71 and 72. Thus, each communication hole 85 communicates with the space 87 between the corresponding locking groove 61 and the corresponding mounting groove 62. Subsequently, each elastic member 63 is inserted into the communication hole 85 from the one end side in the axial direction to be inserted between the locking groove 61 and the mounting groove 62. At this time, as described above, the compression amount of the spring part 63c in the radial direction becomes larger than the compression amount in a state in which the elastic member 63 has been inserted between the locking groove 61 and the mounting groove 62. Thus, only by pushing the elastic member 63 from the one end side in the axial direction, the elastic member 63 can be inserted between the locking groove 61 and the mounting groove 62. Subsequently, the snap ring 74 is attached into the annular groove 73, and thus the aligning structure 48 is assembled. In addition, the belt 45 is wound around the driven pulley 44, the bearing 52 is assembled into the ball screw nut 51, and other assembling processes are performed, whereby the EPS 1 is produced.

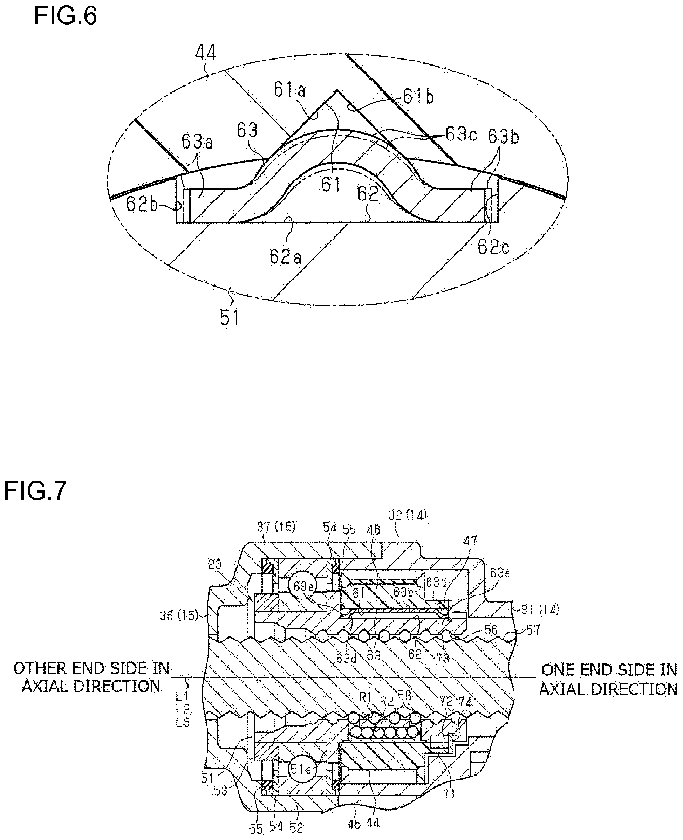

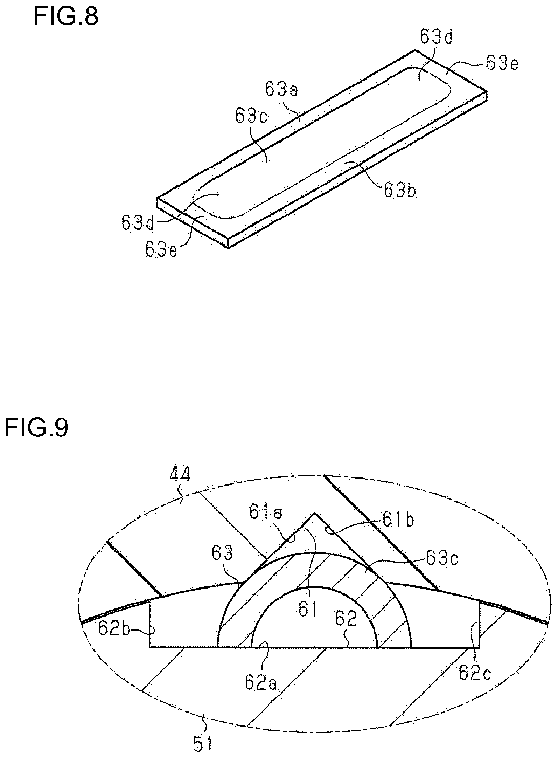

As described in the foregoing, according to the present embodiment, the following functional effects can be obtained.
(1) The ball screw nut 51 is loosely fitted into the inner periphery of the driven pulley 44 and receives biasing force from the elastic members 63, and thus a radial load applied to the ball screw nut 51 is lower than when the ball screw nut 51 is press-fitted. Thus, the ball screw nut 51 can be prevented from being distorted, and smooth operation of the ball screw mechanism 23 can be maintained. Because the biasing force is applied to between the driven pulley 44 and the ball screw nut 51 so as to align the axes L2 and L3 with each other by the aligning structure 48, the driven pulley 44 and the ball screw nut 51 can be coaxially aligned accurately.
   Furthermore, as indicated by long dashed double-short dashed lines in FIG. 6, the elastic member 63 is disposed in the mounting groove 62 with the base parts 63a and 63b spaced apart from the circumferential side surfaces 62b and 62c of the mounting groove 62, respectively, and thus the base parts 63a and 63b can be displaced in the mounting groove 62 when the spring part 63c elastically deforms. Consequently, the spring part 63c can elastically deform more easily than when the base parts 63a and 63b are provided without spaces from the circumferential side surfaces 62b and 62c of the mounting groove 62, and thus the elastic member 63 can be prevented from being forcibly deformed, and an excessive load can be prevented from being applied from the elastic member 63 (the base parts 63a and 63b) to the mounting groove 62.
(2) Because the driven pulley 44 contains resin material, lighter weight can be achieved than when it contains metallic material. In contrast, the ball screw nut 51 contains metallic material, and thus a backlash is likely to be generated between the driven pulley 44 and the ball screw nut 51 due to difference in linear thermal expansion coefficient when the temperature changes. In view of this, the effect of coaxially aligning the driven pulley 44 and the ball screw nut 51 by the aligning structure 48 is significant.
(3) Because the base parts 63a and 63b are each formed in a plate-like shape so as to extend in the circumferential direction and be in surface contact with the bottom surface 62a of the mounting groove 62, the biasing force of the elastic member 63 is received by surfaces. Thus an excessive load can be satisfactorily prevented from being applied to the mounting groove 62.
(4) The mounting grooves 62 and the locking grooves 61 are formed at regular angular intervals in the circumferential direction, and thus biasing force can be satisfactorily applied between the driven pulley 44 and the ball screw nut 51 from the elastic members 63 so as to align the axes L2 and L3 with each other.
(5) The axial range in which each elastic member 63 is inserted between the corresponding mounting groove 62 and the corresponding locking groove 61 overlaps the whole of the axial range on the driven pulley 44 around which the belt 45 is wound, and thus tilting of the driven pulley 44 due to torque transmitted from the belt 45 to the driven pulley 44 can be prevented.
(6) Each mounting groove 62 and the corresponding locking groove 61 are each formed so as to be open to the one end side in the axial direction, and thus after the ball screw nut 51 is loosely fitted into the inner periphery of the driven pulley 44, each elastic member 63 can be inserted between the mounting groove 62 and the locking groove 61 from the one end side in the axial direction. Because the snap ring 74 that faces the respective elastic members 63 in the axial direction is provided to the ball screw nut 51, the elastic members 63 can be reliably prevented from being ejected from inside the mounting grooves 62 and the locking grooves 61.
(7) The positioning recessed portions 71 and 72 are formed in the driven pulley 44 and the ball screw nut 51, respectively, and thus the relative position between the driven pulley 44 and the ball screw nut 51 can be easily determined such that each mounting groove 62 and the corresponding locking groove 61 are opposed to each other in the radial direction.
(8) The cross-section of each locking groove 61 is formed in a V-shape in which the inner surfaces 61a and 61b are connected at a bottom portion of the locking groove 61, and the cross-section of each mounting groove 62 is formed in a rectangular shape having the flat bottom surface 62a. Thus, the locking groove 61 and the mounting groove 62 can be easily formed.
(9) The aligning structure 48 is designed to be assembled by loosely fitting the ball screw nut 51 into the inner periphery of the driven pulley 44, and then inserting each elastic member 63 between the corresponding mounting groove 62 and the corresponding locking groove 61. Thus, for example, unlike when the elastic members 63 are placed in the mounting grooves 62 and then the ball screw nut 51 is inserted into the inner periphery of the driven pulley 44, the elastic members 63 can be prevented from falling out of the mounting grooves 62 during insertion of the ball screw nut 51, and thus the elastic members 63 can be easily assembled.
(10) Using the insertion jig 81 enables the relative position between the driven pulley 44 and the ball screw nut 51 to be easily determined, and also enables each elastic member 63 to be easily inserted between the corresponding mounting groove 62 and the corresponding locking groove 61.
   The following describes a second embodiment of the steering system of the present invention with reference to FIG. 7 and FIG. 8. For convenience of description, the same components are denoted by the same numerals as those in the first embodiment, and description thereof is omitted.
   As depicted in FIG. 7 and FIG. 8, in both end portions of a spring part 63c of each elastic member 63 of the present embodiment in the axial direction, inclined parts 63d are formed that are inclined so as to be positioned closer to base parts 63a and 63b along the axial direction. On distal end sides of the inclined parts 63d, plate-like flat parts 63e are formed that are flush with the base parts 63a and 63b.
   In the present embodiment, without using the insertion jig 81, the aligning structure 48 is assembled by loosely fitting the ball screw nut 51 into the inner periphery of the driven pulley 44 and, with each locking groove 61 and the corresponding mounting groove 62 being opposed to each other in the radial direction, inserting each elastic member 63 between the locking groove 61 and the mounting groove 62. In this case, the elastic member 63 has the inclined parts 63d as described above, and thus even without a process of compressing the spring part 63c in the radial direction in advance, the spring part 63c is gradually compressed in the radial direction as the elastic member 63 is inserted.
   The following describes functional effects of the present embodiment. In the present embodiment, in addition to the functional effects (1) to (9) of the first embodiment described above, the following functional effect can be obtained.
(11) The inclined parts 63d are formed on both end portions of the spring part 63c in the axial direction, and thus after the ball screw nut 51 is fitted into the inner periphery of the driven pulley 44, the elastic members 63 can be easily assembled without using the insertion jig 81.

Each of the above-described embodiments may be appropriately modified to be implemented in the following manners. In the first embodiment, the cross-sectional shape of each communication hole 85 of the insertion jig 81 is a cross-sectional shape formed by combining the shapes of each locking groove 61 and the corresponding mounting groove 62. However, the present invention is not limited to this, and the cross-sectional shape of the communication hole 85 may be appropriately changed to any cross-sectional shape that enables the compression amount of the spring part 63c at the other end of the communication hole 85 in the axial direction to be larger than the compression amount of the spring part 63c between the locking groove 61 and the mounting groove 62.

In the first embodiment, the positioning recessed portions 71 and 72 do not have to be formed, and the positioning projecting portion 84 does not have to be formed in the insertion jig 81. A positioning recessed portion may be formed in either one of the driven pulley 44 and the ball screw nut 51, and a positioning projecting portion that engages with the positioning recessed portion may be formed in the other one.

In the embodiments, the snap ring 74 is provided as a fixing member facing the respective elastic members 63 and the driven pulley 44 in the axial direction. However, the present invention is not limited to this, and a nut, for example, may be screwed as a fixing member onto the ball screw nut 51. Alternatively, a nut having a flange that protrudes inward in the radial direction may be screwed as a fixing member onto the driven pulley 44. These fixing members do not have to be provided to the driven pulley 44 and the ball screw nut 51.

In the second embodiment, each elastic member 63 may have an inclined part 63d only on either one of both end portions of the spring part 63c in the axial direction. The elastic member 63 does not have to have the flat parts 63e.

In the embodiments, each elastic member 63 may be formed such that the axial length thereof is shorter than the axial length of each locking groove 61, and a range where the elastic member 63 does not exist may be formed in the axial range on the driven pulley 44 around which the belt 45 is wound.

In the embodiments, the numbers of the locking grooves 61, the mounting grooves 62, and the elastic members 63 may be appropriately changed to any number of two or more. In the embodiments, the locking grooves 61 and the mounting grooves 62 are formed at regular angular intervals in the circumferential direction, but the present invention is not limited to this. For example, the locking grooves 61 and the mounting grooves 62 may be formed at positions corresponding to the respective vertices of an isosceles triangle. This or above-described arrangement may be appropriately changed to any arrangement that enables the elastic members 63 to apply biasing force so as to align the axis L2 of the driven pulley 44 and the axis L3 of the ball screw nut 51 with each other.

In the embodiments, the base parts 63a and 63b are each formed in a plate-like shape so as to be in surface contact with the bottom surface 62a of each mounting groove 62, but the present invention is not limited to this. For example, as depicted in FIG. 9, both end portions of the spring part 63c may be formed so as to serve as base parts that are in contact with the bottom surface 62a. The cross-sectional shape of the spring part 63c is not limited to an arc-shape, and may be appropriately changed to any shape that enables the spring part to be locked with respect to the corresponding locking groove 61 from both sides in the circumferential direction.

In the embodiments, the cross-section of each locking groove 61 has a V-shape, but the present invention is not limited to this. For example, the cross-section may have an elliptical shape or another shape, and the shape may be appropriately changed to any shape that enables the spring part 63c to be locked from both sides in the circumferential direction. The cross-sectional shape of each mounting groove 62 is not limited to a rectangular shape. For example, the bottom surface 62a may be formed to be an arc-shaped curved surface, and the shape thereof may be appropriately modified.

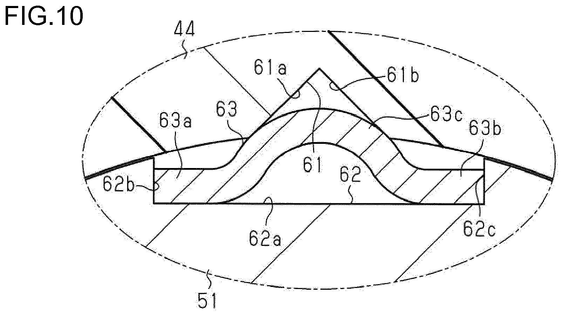

In the embodiments, each elastic member 63 is disposed in the corresponding mounting groove 62 with the base parts 63a and 63b spaced apart from the circumferential side surfaces 62b and 62c of the mounting groove 62, respectively, but the present invention is not limited to this. For example, as depicted in FIG. 10, the elastic member may be disposed in the mounting groove 62 such that the base parts 63a and 63b being in surface contact with the bottom surface 62a are in contact with the circumferential side surfaces 62b and 62c, respectively.

Alternatively, the elastic member 63 may be disposed in the mounting groove 62 with either one of the base parts 63a and 63b spaced apart from only either one of the circumferential side surfaces 62b and 62c of the mounting groove 62, respectively. By these configurations, a functional effect that is similar to the functional effect (1) in the above-described embodiments can be obtained.

In the embodiments, the mounting grooves 62 may be formed on the inner peripheral surface of the driven pulley 44, and the locking grooves 61 may be formed on the outer peripheral surface of the ball screw nut 51. In the embodiments, the driven pulley 44 may contain metallic material.

In the embodiments, the ball screw nut 51 is rotatably supported via the bearing 52 in the second accommodating portion 37, but the present invention is not limited to this. For example, the driven pulley 44 may be formed in a size capable of accommodating substantially the whole of the ball screw nut 51, and the driven pulley 44 may be rotatably supported via a bearing in the second accommodating portion 37.

In the embodiments, the present invention is embodied in the EPS 1 in which assist force is applied to the rack shaft 12 by the motor 21 disposed parallel to the rack shaft 12. However, the present invention is not limited to this, and may be applied to a steer-by-wire (SBW) steering system. When being embodied in the SBW steering system, the present invention may be embodied not only as a front-wheel steering system, but also as a rear-wheel steering system or a four-wheel steering system (4WS).

## Claims

1. A steering system comprising:
a steering operation shaft provided so as to be able to reciprocate in an axial direction and having a groove (56, 57) that is formed in part of an outer periphery of the steering operation shaft and along which a ball rolls (58);
a motor (21) disposed parallel to the steering operation shaft;
a drive pulley (43) coupled to the motor (21);
a driven pulley (44) rotatably provided in a housing (13) that accommodates the steering operation shaft;
a belt (45) wound around the drive pulley (43) and the driven pulley (44);
a ball screw nut (51) loosely fitted into an inner periphery of the driven pulley (44) and constituting a ball screw mechanism (23) that is screwed onto the steering operation shaft via a plurality of balls (58) and converts rotation of the driven pulley (44) into reciprocation of the steering operation shaft; and
an aligning structure (48) including a plurality of mounting grooves (62) formed on a first surface among an inner peripheral surface of the driven pulley (44) and an outer peripheral surface of the ball screw nut (51) and extending in an axial direction, a plurality of locking grooves (61) formed on a second surface among the inner peripheral surface of the driven pulley (44) and the outer peripheral surface of the ball screw nut (51), extending in the axial direction, and opposed to the respective mounting grooves (62) in a radial direction, and a plurality of elastic members (63) each of which has a pair of base parts (63a, 63b) extending in the axial direction and a spring part formed between the base parts (63a, 63b) and being elastically deformable in the radial direction, the aligning structure (48) being configured to apply biasing force from the elastic members (63) to between the driven pulley (44) and the ball screw nut (51) so as to align an axis of the driven pulley (44) and an axis of the ball screw nut (51) with each other, wherein
each of the elastic members (63) is disposed in the corresponding mounting groove (62) with at least one of the pair of base parts (63a, 63b) spaced apart from a circumferential side surface of the mounting groove (62), and the spring part (63c) is locked with respect to the corresponding locking groove (61) from both sides in a circumferential direction, **characterized in that**
in the driven pulley (44) and the ball screw nut (51), positioning portions (71, 72) are each formed that determine a relative position between the corresponding mounting groove (62) and the corresponding locking groove (61) such that the mounting groove (62) and the locking groove (61) are opposed to each other in the radial direction.

2. The steering system according to claim 1, wherein the driven pulley (44) contains resin material, and the ball screw nut (51) contains metallic material.

3. The steering system according to claim 1 or 2, wherein the pair of base parts (63a, 63b) are each formed in a plate-like shape so as to extend in the circumferential direction and be in surface (62a) contact with a bottom surface of the mounting groove (62).

4. The steering system according to any one of claims 1 to 3, wherein the mounting grooves (62) and the locking grooves (61) are both formed at regular angular intervals in the circumferential direction.

5. The steering system according to any one of claims 1 to 4, wherein an axial range in which each elastic member (63) is inserted between the corresponding mounting groove (62) and the corresponding locking groove (61) overlaps the whole of an axial range on the driven pulley (44) around which the belt (45) is wound.

6. The steering system according to any one of claims 1 to 5, wherein in at least one of both end portions of the spring part (63c) in the axial direction, an inclined part (63d) is formed that is inclined so as to be positioned closer to one of the base parts (63a, 63b) along the axial direction.

7. The steering system according to any one of claims 1 to 6, wherein
each mounting groove (62) and the corresponding locking (61) groove are each formed so as to be open to one end side in the axial direction, and
the aligning structure (48) includes a fixing member (x74) fixed to either one of the driven pulley (44) and the ball screw nut (51) and facing the respective elastic members (63) in the axial direction.

8. A method for producing a steering system including: a steering operation shaft provided so as to be able to reciprocate in an axial direction and having a groove (56, 57) that is formed in part of an outer periphery of the steering operation shaft and along which a ball (58) rolls; a motor (21) disposed parallel to the steering operation shaft; a drive pulley (43) coupled to the motor (21); a driven pulley (44) rotatably provided in a housing (13) that accommodates the steering operation shaft; a belt (45) wound around the drive pulley (43) and the driven pulley (44); a ball screw nut (51) loosely fitted into an inner periphery of the driven pulley (44) and constituting a ball screw mechanism (23) that is screwed onto the steering operation shaft via a plurality of balls (58) and converts rotation of the driven pulley (44) into reciprocation of the steering operation shaft; and an aligning structure (48) including a plurality of mounting grooves (62) formed on a first surface among an inner peripheral surface of the driven pulley (44) and an outer peripheral surface of the ball screw nut (51), extending in the axial direction, and being open to one side in the axial direction, a plurality of locking grooves (61) formed on a second surface among the inner peripheral surface of the driven pulley (44) and the outer peripheral surface of the ball screw nut (51), extending in the axial direction, being open to the one side in the axial direction, and opposed to the respective mounting grooves (62) in a radial direction, and a plurality of elastic members (63) each of which has a pair of base parts (63a, 63b) extending in the axial direction and a spring part (63c) formed between the base parts (63a, 63b) and being elastically deformable in the radial direction, the aligning structure (48) being configured to apply biasing force from the elastic members (63) to between the driven pulley (44) and the ball screw nut (51) so as to align an axis of the driven pulley (44) and an axis of the ball screw nut (51) with each other, the method comprising:
after the ball screw nut (51) is loosely fitted into the inner periphery of the driven pulley (44), inserting each of the elastic members (63) between the corresponding mounting groove (62) and the corresponding locking groove (61) from one end side in the axial direction such that the elastic member (63) is disposed in the mounting groove (62) with at least one of the pair of base parts (63a, 63b) spaced apart from a circumferential side surface of the mounting groove (62) and also such that the spring part (63c) is locked with respect to the locking groove (61) from both sides in a circumferential direction,
**characterized in that** in the driven pulley (44) and the ball screw nut (51), positioning recessed portions (71, 72) are each formed that determine a relative position between the corresponding mounting groove (62) and the corresponding locking groove (61) such that the mounting groove (62) and the locking groove (61) are opposed to each other in the radial direction.

9. The method for producing a steering system according to claim 8, wherein
each elastic member (63) is inserted between the mounting groove (62) and the locking groove (61) by using an insertion jig (81) having a positioning projecting portion (84) that is inserted between the positioning recessed portions (71) and a communication hole (85) that penetrates the insertion jig (81) and communicates with a space between the mounting groove (62) and the locking groove (61) in the axial direction, the communication hole (85) being formed such that compression amount of the spring part (63c) in the radial direction at an opening of the communication hole (85) closer to the space is larger than the compression amount at an opening of the communication hole (85) opposite to the space, and is also larger than the compression amount between the mounting groove (62) and the locking groove (61).

## Patentansprüche

1. Lenksystem mit
einer Lenkbetätigungswelle, die so vorgesehen ist, dass sie sich in einer axialen Richtung hin- und herbewegen kann, und die eine Nut (56, 57) aufweist, die in einem Teil eines Außenumfangs der Lenkbetätigungswelle ausgebildet ist und entlang der eine Kugel (58) rollt;
einem Motor (21), der parallel zu der Lenkbetätigungswelle angeordnet ist;
einer mit dem Motor (21) gekoppelten Antriebsriemenscheibe (43);
einer angetriebenen Riemenscheibe (44), die drehbar in einem Gehäuse (13) vorgesehen ist, das die Lenkbetätigungswelle unterbringt;
einem Riemen (45), der um die Antriebsriemenscheibe (43) und die angetriebene Riemenscheibe (44) gewickelt ist;
einer Kugelumlaufspindelmutter (51), die lose in einen Innenumfang der angetriebenen Riemenscheibe (44) eingepasst ist und einen Kugelumlaufspindelmechanismus (23) bildet, der über eine Vielzahl von Kugeln (58) auf die Lenkbetätigungswelle geschraubt ist und eine Drehung der angetriebenen Riemenscheibe (44) in eine Hin- und Herbewegung der Lenkbetätigungswelle umwandelt; und
einer Ausrichtungsstruktur (48), die eine Vielzahl von Befestigungsnuten (62), die auf einer ersten Fläche zwischen einer Innenumfangsfläche der angetriebenen Riemenscheibe (44) und einer Außenumfangsfläche der Kugelumlaufspindelmutter (51) ausgebildet sind und sich in einer axialen Richtung erstrecken, eine Vielzahl von Verriegelungsnuten (61), die auf einer zweiten Fläche zwischen der Innenumfangsfläche der angetriebenen Riemenscheibe (44) und der Außenumfangsfläche der Kugelumlaufspindelmutter (51) ausgebildet sind, sich in der axialen Richtung erstrecken und den entsprechenden Befestigungsnuten (62) in einer radialen Richtung gegenüberliegen, und eine Vielzahl von elastischen Elementen (63) aufweist, von denen jedes ein Paar von Basisteilen (63a, 63b), die sich in der axialen Richtung erstrecken, und einen Federteil aufweist, der zwischen den Basisteilen (63a, 63b) ausgebildet ist und in der radialen Richtung elastisch verformbar ist, wobei die Ausrichtungsstruktur (48) so konfiguriert ist, dass sie eine Vorspannkraft von den elastischen Elementen (63) zwischen die angetriebene Riemenscheibe (44) und die Kugelumlaufspindelmutter (51) aufbringt, um eine Achse der angetriebenen Riemenscheibe (44) und eine Achse der Kugelumlaufspindelmutter (51) miteinander auszurichten, wobei
jedes der elastischen Elemente (63) in der entsprechenden Befestigungsnut (62) angeordnet ist, wobei mindestens eines der beiden Basisteile (63a, 63b) von einer Umfangsseitenfläche der Befestigungsnut (62) beabstandet ist, und der Federteil (63c) in Bezug auf die entsprechende Verriegelungsnut (61) von beiden Seiten in einer Umfangsrichtung verriegelt ist, **dadurch gekennzeichnet, dass**
in der angetriebenen Riemenscheibe (44) und der Kugelumlaufspindelmutter (51) jeweils Positionierungsabschnitte (71, 72) ausgebildet sind, die eine relative Position zwischen der entsprechenden Befestigungsnut (62) und der entsprechenden Verriegelungsnut (61) derart bestimmen, dass die Befestigungsnut (62) und die Verriegelungsnut (61) in der radialen Richtung einander gegenüberliegen.

2. Lenksystem nach Anspruch 1, wobei die angetriebene Riemenscheibe (44) Harzmaterial und die Kugelumlaufspindelmutter (51) metallisches Material enthält.

3. Lenksystem nach Anspruch 1 oder 2, wobei das Paar von Basisteilen (63a, 63b) jeweils in einer plattenartigen Form ausgebildet ist, so dass sie sich in der Umfangsrichtung erstrecken und in Flächenkontakt mit einer Bodenfläche der Befestigungsnut (62) stehen.

4. Lenksystem nach einem der Ansprüche 1 bis 3, wobei die Befestigungsnuten (62) und die Verriegelungsnuten (61) beide in gleichmäßigen Winkelabständen in der Umfangsrichtung ausgebildet sind.

5. Lenksystem nach einem der Ansprüche 1 bis 4, wobei ein axialer Bereich, in den jedes elastische Element (63) zwischen die entsprechende Befestigungsnut (62) und die entsprechende Verriegelungsnut (61) eingeführt ist, den gesamten axialen Bereich der angetriebenen Riemenscheibe (44), um die der Riemen (45) gewickelt ist, überlappt.

6. Lenksystem nach einem der Ansprüche 1 bis 5, wobei in mindestens einem von beiden Endabschnitten des Federteils (63c) in der axialen Richtung ein geneigter Teil (63d) ausgebildet ist, der so geneigt ist, dass er entlang der axialen Richtung näher an einem der Basisteile (63a, 63b) positioniert ist.

7. Lenksystem nach einem der Ansprüche 1 bis 6, wobei
jede Befestigungsnut (62) und die entsprechende Verriegelungsnut (61) jeweils so ausgebildet sind, dass sie in der axialen Richtung zu einer Endseite hin offen sind, und
die Ausrichtungsstruktur (48) ein Befestigungselement (x74) aufweist, das entweder an der angetriebenen Riemenscheibe (44) oder der Kugelumlaufspindelmutter (51) befestigt ist und den entsprechenden elastischen Elementen (63) in der axialen Richtung zugewandt ist.

8. Verfahren zur Herstellung eines Lenksystems mit einer Lenkbetätigungswelle, die so vorgesehen ist, dass sie sich in einer axialen Richtung hin- und herbewegen kann, und die eine Nut (56, 57) aufweist, die in einem Teil eines Außenumfangs der Lenkbetätigungswelle ausgebildet ist und entlang der eine Kugel (58) rollt; einem Motor (21), der parallel zu der Lenkbetätigungswelle angeordnet ist; einer mit dem Motor (21) gekoppelten Antriebsriemenscheibe (43); einer angetriebenen Riemenscheibe (44), die drehbar in einem Gehäuse (13) vorgesehen ist, das die Lenkbetätigungswelle unterbringt; einem Riemen (45), der um die Antriebsriemenscheibe (43) und die angetriebene Riemenscheibe (44) gewickelt ist; einer Kugelumlaufspindelmutter (51), die lose in einen Innenumfang der angetriebenen Riemenscheibe (44) eingepasst ist und einen Kugelumlaufspindelmechanismus (23) bildet, der über eine Vielzahl von Kugeln (58) auf die Lenkbetätigungswelle geschraubt ist und eine Drehung der angetriebenen Riemenscheibe (44) in eine Hin- und Herbewegung der Lenkbetätigungswelle umwandelt; und einer Ausrichtungsstruktur (48), die eine Vielzahl von Befestigungsnuten (62), die auf einer ersten Fläche zwischen einer Innenumfangsfläche der angetriebenen Riemenscheibe (44) und einer Außenumfangsfläche der Kugelumlaufspindelmutter (51) ausgebildet sind, sich in einer axialen Richtung erstrecken und in der axialen Richtung zu einer Seite hin offen sind, eine Vielzahl von Verriegelungsnuten (61), die auf einer zweiten Fläche zwischen der Innenumfangsfläche der angetriebenen Riemenscheibe (44) und der Außenumfangsfläche der Kugelumlaufspindelmutter (51) ausgebildet sind, sich in der axialen Richtung erstrecken, in der axialen Richtung zu der einen Seite hin offen sind und den entsprechenden Befestigungsnuten (62) in einer radialen Richtung gegenüberliegen, und eine Vielzahl von elastischen Elementen (63) aufweist, von denen jedes ein Paar von Basisteilen (63a, 63b), die sich in der axialen Richtung erstrecken, und einen Federteil (63c) aufweist, der zwischen den Basisteilen (63a, 63b) ausgebildet ist und in der radialen Richtung elastisch verformbar ist, wobei die Ausrichtungsstruktur (48) so konfiguriert ist, dass sie eine Vorspannkraft von den elastischen Elementen (63) zwischen die angetriebene Riemenscheibe (44) und die Kugelumlaufspindelmutter (51) aufbringt, um eine Achse der angetriebenen Riemenscheibe (44) und eine Achse der Kugelumlaufspindelmutter (51) miteinander auszurichten, wobei das Verfahren aufweist:
nachdem die Kugelumlaufspindelmutter (51) lose in den Innenumfang der angetriebenen Riemenscheibe (44) eingepasst ist, Einführen jedes der elastischen Elemente (63) zwischen die entsprechende Befestigungsnut (62) und die entsprechende Verriegelungsnut (61) von einer Endseite in der axialen Richtung, so dass das elastische Element (63) in der Befestigungsnut (62) angeordnet ist, wobei mindestens eines der beiden Basisteile (63a, 63b) von einer Umfangsseitenfläche der Befestigungsnut (62) beabstandet ist, und auch so dass der Federteil (63c) in Bezug auf die Verriegelungsnut (61) von beiden Seiten in einer Umfangsrichtung verriegelt ist,
**dadurch gekennzeichnet, dass** in der angetriebenen Riemenscheibe (44) und der Kugelumlaufspindelmutter (51) jeweils Positionierungsaussparungsabschnitte (71, 72) ausgebildet sind, die eine relative Position zwischen der entsprechenden Befestigungsnut (62) und der entsprechenden Verriegelungsnut (61) derart bestimmen, dass die Befestigungsnut (62) und die Verriegelungsnut (61) in der radialen Richtung einander gegenüberliegen.

9. Verfahren zur Herstellung eines Lenksystems nach Anspruch 8, wobei
jedes elastische Element (63) zwischen die Befestigungsnut (62) und die Verriegelungsnut (61) unter Verwendung einer Einführungsvorrichtung (81) mit einem Positionierungsvorsprungabschnitt (84) eingeführt ist, der zwischen die Positionierungsaussparungsabschnitten (71) und ein Kommunikationsloch (85) eingeführt ist, das die Einführungsvorrichtung (81) durchdringt und mit einem Raum zwischen der Befestigungsnut (62) und der Verriegelungsnut (61) in der axialen Richtung in Verbindung steht, wobei das Kommunikationsloch (85) derart ausgebildet ist, dass ein Kompressionsbetrag des Federteils (63c) in der radialen Richtung an einer Öffnung des Kommunikationslochs (85), die näher am Raum liegt, größer ist als der Kompressionsbetrag an einer Öffnung des Kommunikationslochs (85), die dem Raum gegenüberliegt, und auch größer ist als der Kompressionsbetrag zwischen der Befestigungsnut (62) und der Verriegelungsnut (61).

## Revendications

1. Dispositif de direction comprenant :
un arbre de commande de direction prévu afin de pouvoir effectuer un mouvement de va-et-vient dans une direction axiale et ayant une rainure (56, 57) qui est fait partie d'une périphérie externe de l'arbre de commande de direction et le long duquel une bille (58) roule ;
un moteur (21) disposé parallèlement à l'arbre de commande de direction ;
une poulie d'entraînement (43) couplée au moteur (21) ;
une poulie entraînée (44) prévue en rotation dans un boîtier (13) qui loge l'arbre de commande de direction ;
une courroie (45) enroulée autour de la poulie d'entraînement (43) et de la poulie entraînée (44) ;
un écrou de vis sphérique (51) monté sans serrage dans une périphérie interne de la poulie entraînée (44) et constituant un mécanisme de vis sphérique (23) qui est vissé sur l'arbre de commande de direction via une pluralité de billes (58) et convertit la rotation de la poulie entraînée (44) en mouvement de va-et-vient de l'arbre de commande de direction ; et
une structure d'alignement (48) comprenant une pluralité de rainures de montage (62) formées sur une première surface parmi une surface périphérique interne de la poulie d'entraînement (44) et une surface périphérique externe de l'écrou de vis sphérique (51) et s'étendant dans une direction axiale, une pluralité de rainures de verrouillage (61) formées sur une seconde surface parmi la surface périphérique interne de la poulie entraînée (44) et la surface périphérique externe de l'écrou de vis sphérique (51), s'étendant dans la direction axiale, et opposées aux rainures de montage (62) respectives dans une direction radiale et une pluralité d'éléments élastiques (63) dont chacun a une paire de parties de base (63a, 63b) s'étendant dans la direction axiale et une partie de ressort formée entre les parties de base (63a, 63b) et étant élastiquement déformable dans la direction radiale, la structure d'alignement (48) étant configurée pour appliquer une force de sollicitation à partir des éléments élastiques (63) jusque entre la poulie entraînée (44) et l'écrou de vis sphérique (51) afin d'aligner un axe de la poulie entraînée (44) et un axe de l'écrou de vis sphérique (51) l'un par rapport à l'autre, dans lequel :
chacun des éléments élastiques (63) est disposé dans la rainure de montage (62) correspondante avec au moins l'une de la paire de parties de base (63a, 63b) espacées d'une surface latérale circonférentielle de la rainure de montage (62), et la partie de ressort (63c) est verrouillée par rapport à la rainure de verrouillage (61) correspondante des deux côtés dans une direction circonférentielle, **caractérisé en ce que** :
dans la poulie entraînée (44) et l'écrou de vis sphérique (51), on forme des parties de positionnement (71, 72) qui déterminent une position relative entre la rainure de montage (62) correspondante et la rainure de verrouillage (61) correspondante de sorte que la rainure de montage (62) et la rainure de verrouillage (61) sont opposées entre elles dans la direction radiale.

2. Système de direction selon la revendication 1, dans lequel la poulie entraînée (44) contient un matériau en résine, et l'écrou de vis sphérique (51) contient un matériau métallique.

3. Système de direction selon la revendication 1 ou 2, dans lequel la paire de parties de base (63a, 63b) sont chacune formées en forme de plaque afin de s'étendre dans la direction circonférentielle et être en contact de surface (62a) avec une surface inférieure de la rainure de montage (62).

4. Système de direction selon l'une quelconque des revendications 1 à 3, dans lequel les rainures de montage (62) et les rainures de verrouillage (61) sont toutes deux formées à intervalles angulaires réguliers dans la direction circonférentielle.

5. Système de direction selon l'une quelconque des revendications 1 à 4, dans lequel une plage axiale dans laquelle chaque élément élastique (63) est inséré entre la rainure de montage (62) correspondante et la rainure de verrouillage (61) correspondante recouvre la totalité d'une plage axiale sur la poulie entraînée (44) autour de laquelle la courroie (45) est enroulée.

6. Système de direction selon l'une quelconque des revendications 1 à 5, dans lequel dans au moins l'une des deux parties d'extrémité de la partie de ressort (63c) dans la direction axiale, on forme une partie inclinée (63d) qui est inclinée pour être positionnée plus à proximité de l'une des parties de base (63a, 63b) le long de la direction axiale.

7. Système de direction selon l'une quelconque des revendications 1 à 6, dans lequel :
chaque rainure de montage (62) et la rainure de verrouillage (61) correspondante sont chacune formées afin d'être ouvertes sur un côté d'extrémité dans la direction axiale, et
la structure d'alignement (48) comprend un élément de fixation (x74) fixé sur chacun parmi la poulie entraînée (44) et l'écrou de vis sphérique (51) et faisant face aux éléments élastiques (63) respectifs dans la direction axiale.

8. Procédé pour produire un système de direction comprenant : un arbre de commande de direction prévu pour pouvoir effectuer un mouvement de va-et-vient dans une direction axiale et ayant une rainure (56, 57) qui fait partie d'une périphérie externe de l'arbre de commande de direction et le long de laquelle une bille (58) roule ; un moteur (21) disposé parallèlement à l'arbre de commande de direction ; une poulie d'entraînement (43) couplée au moteur (21) ; une poulie entraînée (44) prévue en rotation dans un boîtier (13) qui loge l'arbre de commande de direction ; une courroie (45) enroulée autour de la poulie d'entraînement (43) et de la poulie entraînée (44) ; un écrou de vis sphérique (51) monté sans serrage dans une périphérie interne de la poulie entraînée (44) et constituant un mécanisme de vis sphérique (23) qui est vissé sur l'arbre de commande de direction via une pluralité de billes (58) et convertit la rotation de la poulie entraînée (44) en mouvement de va-et-vient de l'arbre de commande de direction ; et une structure d'alignement (48) comprenant une pluralité de rainures de montage (62) formées sur une première surface parmi une surface périphérique interne de la poulie entraînée (44) et une surface périphérique externe de l'écrou de vis sphérique (51), s'étendant dans la direction axiale, et étant ouverte sur un côté dans la direction axiale, une pluralité de rainures de verrouillage (61) formées sur une seconde surface parmi la surface périphérique interne de la poulie entraînée (44) et la surface périphérique externe de l'écrou de vis sphérique (51), s'étendant dans la direction axiale, étant ouvertes sur le premier côté dans la direction axiale et opposées aux rainures de montage (62) respectives dans une direction radiale, et une pluralité d'éléments élastiques (63), dont chacun a une paire de parties de base (63a, 63b) s'étendant dans la direction axiale et une partie de ressort (63c) formée entre les parties de base (63a, 63b) et étant élastiquement déformable dans la direction radiale, la structure d'alignement (48) étant configurée pour appliquer une force de sollicitation à partir des éléments élastiques (63) jusque entre la poulie entraînée (44) et l'écrou de vis sphérique (51) afin d'aligner un axe de la poulie entraînée (44) et un axe de l'écrou de vis sphérique (51) l'un par rapport à l'autre, le procédé comprenant les étapes suivantes :
après que l'écrou de vis sphérique (51) a été monté sans serrage dans la périphérie interne de la poulie entraînée (44), insérer chacun des éléments élastiques (63) entre la rainure de montage (62) correspondante et la rainure de verrouillage (61) correspondante depuis un côté d'extrémité dans la direction axiale de sorte que l'élément élastique (63) est disposé dans la rainure de montage (62) avec au moins l'une de la paire de parties de base (63a, 63b) espacée par rapport à une surface latérale circonférentielle de la rainure de montage (62) et également de sorte que la partie de ressort (63c) est verrouillée par rapport à la rainure de verrouillage (61) depuis deux côtés dans une direction circonférentielle,
**caractérisé en ce que** dans la poulie entraînée (44) et l'écrou de vis sphérique (51), on forme des parties évidées de positionnement (71, 72) qui déterminent une position relative entre la rainure de montage (62) correspondante et la rainure de verrouillage (61) correspondante de sorte que la rainure de montage (62) et la rainure de verrouillage (61) sont opposées entre elles dans la direction radiale.

9. Procédé pour produire un système de direction selon la revendication 8, dans lequel :
chaque élément élastique (63) est inséré entre la rainure de montage (62) et la rainure de verrouillage (61) en utilisant un gabarit d'insertion (81) ayant une partie de positionnement en saillie (84) qui est insérée entre les parties de positionnement évidées (71) et un trou de communication (85) dans lequel pénètre le gabarit d'insertion (81) et communique avec un espace entre la rainure de montage (62) et la rainure de verrouillage (61) dans la direction axiale, le trou de communication (85) étant formé de sorte que la quantité de compression de la partie de ressort (63c) dans la direction radiale au niveau d'une ouverture du trou de communication (85) plus à proximité de l'espace est supérieure à la quantité de compression au niveau d'une ouverture du trou de communication (85) opposée à l'espace, et est également supérieure à la quantité de compression entre la rainure de montage (62) et la rainure de verrouillage (61).
